# EUROPEAN PATENT APPLICATION

(11) **EP 1 341 368 A2**
(43) Date of publication of application: **03.09.2003**
(21) Application number: 03251133.9
(22) Date of filing: 25.02.2003
(51) Int. Cl.: H04N 1/40

(54) **Image processing apparatus**

(30) Priority: 28.02.2002 JP 2002054594
(71) Applicant: KONICA CORPORATION, Tokyo (JP)
(72) Inventor: Suzuki, Takayuki, c/o Konica Corporation, Hachioji-shi, Tokyo 192-8505 (JP)
(74) Representative: Rees, Alexander Ellison

(57) **Abstract**

An image apparatus that is connected to an outer apparatus and transmits image data to the outer apparatus, having therein; a generating means that generates binarized image data, an acquiring means that acquires the outer apparatus resolution data showing resolution of data which can be processed by the outer apparatus, a calculating means that calculates an image resolution data showing resolution of the image data, and calculates a reduction rate based on the image resolution data and on the outer apparatus resolution data, a dividing means that divides the image data into a plural matrixes in accordance with the reduction rate, a gradation judgment means that judges gradation of each matrix, a distinction means that recognizes a line-work in the image data and distinguishes whether pixels constituting the recognized line-work are present in each matrix or not, a gradation determining means that determines gradation after image processing in each matrix based on results of gradation judgment and on results of distinction, and an image processing means that replaces all pixels in each the matrix with one pixel having gradation determined by the gradation determining means to convert the image data and generates reduced data.

## Description

### BACKGROUND OF THE INVENTION

The present invention relates to an image processing apparatus that conducts reduction processing of image data.

As an image processing apparatus conducting reduction processing of image data, there have so far been devised an apparatus that thins out pixels constituting image data, an apparatus that determines gradation of reduced pixels through logic operation of looked pixels and surrounding pixels and reduces image data, and an apparatus to reduce image data by utilizing an optical system when reading image data. There has further been devised an image processing apparatus that reads image data on a multi-valued basis, and generates reduced images by conducting multi-valued operation when outputting the image data.

However, in the image processing apparatus employing the aforesaid method to thin out pixels simply, fine line-works sometimes become blurred to be scratchy although density of image data can be kept by pseudo-continuous tone, because error diffusion is conducted. On the other hand, in the image processing apparatus wherein there is conducted logic operation of looked pixels and surrounding pixels, if the logic to leave information of dense gradation is selected, there is caused a problem that density of image data is made to be high entirely by pseudo-continuous tone, although line-works are not broken. Further, in the case of an image processing apparatus to reduce optically, when outputting to an outer apparatus having high resolution, reduced image data have been enlarged for outputting, and image quality has been deteriorated accordingly, which has been a problem. Further, in the case of an image processing apparatus that processes image data on a multi-valued basis, when preserving image data converted on a multi-valued basis, necessary memory capacity is increased, compared with an occasion for preserving binarized data, resulting in a problem of high cost and necessity of improvement.

### SUMMARY OF THE INVENTION

The subject of the invention is to provide an image processing apparatus and an image processing method wherein line-work and gradation are preserved when image data are reduced, and image quality of image data outputted to an outer apparatus having high resolution is not deteriorated, and cost is low.

The invention is provided with the following structure to solve the aforesaid subjects.

The present invention is represented by an image apparatus that is connected to an outer apparatus and transmits image data to the outer apparatus, having therein; a generating means that generates binarized image data, an acquiring means that acquires, from the outer apparatus, resolution data of the outer apparatus showing resolution of data which can be processed by the outer apparatus, a calculating means that calculates an image resolution data showing resolution of said image data, and calculates a reduction rate based on said image resolution data and on said outer apparatus resolution data, a dividing means that divides said image data into a plurality of matrixes in accordance with said reduction rate, a gradation judgment means that judges gradation of each matrix stated above, a distinction means that recognizes a line-work in the image data and distinguishes whether pixels constituting the recognized line-work are present in each matrix stated above or not, a gradation determining means that determines gradation after image processing in each matrix based on results of gradation judgment conducted by the gradation judgment means and on results of distinction conducted by the distinction means, an image processing means that replaces all pixels in each said matrix with one pixel having gradation determined by the gradation determining means to convert the image data and generates reduced data and an output means that outputs the image data or the reduced data.

The present invention makes it possible to preserve an original line-work of image data and to keep the gradation when reducing the image data. Further, since image data are binarized in the invention, it is possible to save the memory to be used, compared with the image processing that employs multi-valuing, and thereby to provide an inexpensive image processing apparatus, and it is further possible to reduce an amount of data in the case of transmitting image data to an outer apparatus, and thereby to increase transmission speed. In addition, since reduced data and image data before reduction are selected to be transmitted, according to the resolution of an outer apparatus to which the image data are outputted, image data before reduction can be outputted to the other party having high resolution, which makes it possible to provide image data having less deterioration of image quality.

### BRIEF DESCRIPTION OF THE DRAWINGS

Fig. 1 is a diagram showing the total structure of image providing system 100 in the present embodiment.
Fig. 2 is a block diagram showing functional structures of image processing apparatus 1 shown in Fig. 1.
Fig. 3 is a flow chart showing image data reduction processing by image processing apparatus 1 shown in Fig. 1.
Fig. 4 is a diagram illustrating a concrete example of image data reduction processing.

### DETAILED DESCRIPTION OF THE INVENTION

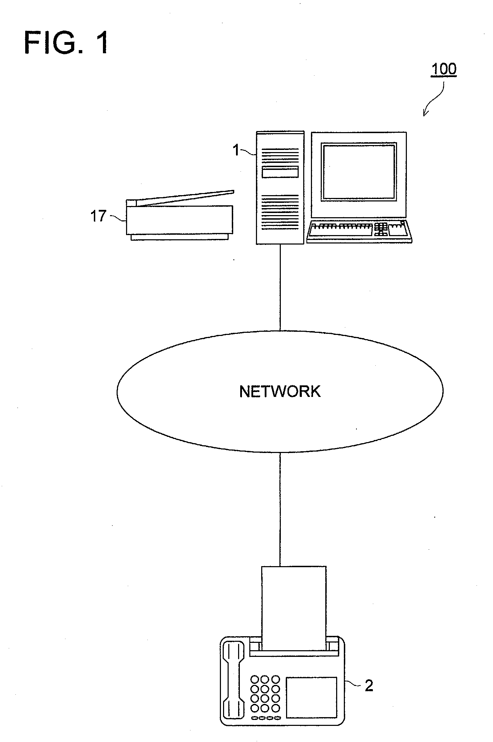

An embodiment of the invention will be explained in detail as follows, referring to Figs. 1 - 4. In the above Structure and in the following embodiment, in this case, a line-work means a linear image such as, for example, a straight line and a curved line. Further, the outer apparatus resolution shows resolution of data that can be processed by the outer apparatus, and the image resolution data mean data showing resolution of image data. Incidentally, facsimile resolution data in the following embodiment correspond to the outer apparatus resolution data described in the Structure stated above. Further, image processing apparatus 1 and facsimile 2 in the following embodiment respectively have functions as the image processing apparatus and the outer apparatus in the above Structure.

The structures will be explained, first.

Fig. 1 is a diagram showing the over-all structure of image providing system 100 in the present embodiment. As shown in Fig. 1, the image providing system 100 is structured in a way that image processing apparatus 1 equipped with image reading section 17 and facsimile 2 are connected each other through network N so that both of them may transmit and receive data.

Incidentally, in Fig. 1, there is shown an example wherein a unit of image processing apparatus 1 and a unit of facsimile 2 are connected through network N, and the number of units of these apparatuses in not limited in particular. Further, an outer apparatus connected to the image processing apparatus 1 is not limited to facsimile 2, and its type is not limited, provided that the outer apparatus can process image data and is equipped with a communication function.

The image processing apparatus 1 is equipped with image reading section 17 (see Fig. 1) that reads image data, and is connected with facsimile 2 through network N. In reduction processing for image data, the image processing apparatus 1 binarizes images read from image reading section 17 and generates image data, then, calculates the reduction rate for image data based on image resolution data showing resolution of image data and on facsimile resolution data showing resolution of facsimile 2, and converts image data with the calculated reduction rate to generate reduced data. Further, image processing apparatus 1 has facsimile communication function to transmit reduced data generated in image data reduction processing to facsimile 2 through network N.

The facsimile 2 is connected with the image processing apparatus 1 through network N, and is equipped with facsimile communication function to transmit and to receive text data and image data, and with function to process the data mentioned above. The facsimile 2 displays image data obtained from the image processing apparatus 1 on an unillustrated display section, or prints from an unillustrated printing mechanism. Incidentally, let it be assumed that resolution of data that can be processed by the facsimile 2 of the present embodiment is lower than that of image data read by the image processing apparatus 1.

Incidentally, data showing resolution in facsimile 2 are called facsimile resolution data, data read by the image processing apparatus 1 and binarized are called image data, data showing resolution of image data are called image resolution data, and data reduced by the image processing apparatus 1 are called reduced data.

The network N is a communication network structured by using private lines or general public lines, and various line forms such as LAN or WAN can be applied to the communication network. In the network N, there are included, for example, various communication line networks such as telephone lines network, ISDN line network, private line network, mobile communication network, communications satellite lines and CATV line network, and Internet service provider that connects the foregoing. Further, although an example wherein respective apparatuses are connected by wire is shown in Fig. 1, wireless connection can also be used. From the viewpoint of reliability of information management, however, it is preferable that the network has security that allows only specific users to access.

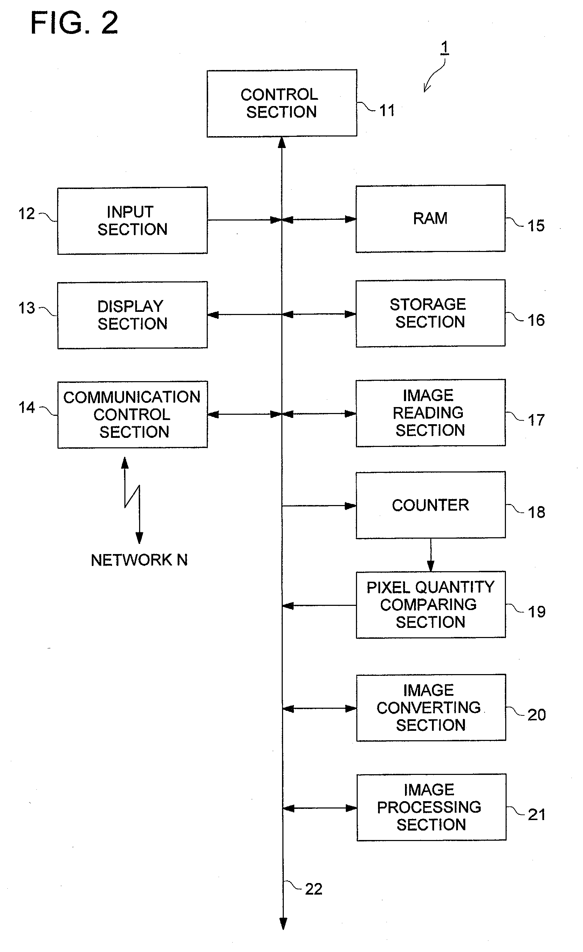

The structure of image processing apparatus 1 will be explained in detail as follows, referring to Fig. 2.

Fig. 2 is a block diagram showing the functional structure of the image processing apparatus 1. As shown in Fig. 2, the image processing apparatus 1 is composed of control section 11, input section 12, display section 13, communication control section 14, RAM 15, storage section 16, image reading section 17, counter 18, pixel quantity comparing section 19, image conversion section 20 and image processing section 21, and each section is connected to others through bus 22.

The control section 11 is composed of CPU (Central Processing Unit) and others, and it reads system programs stored in the storage section 16 and various control programs to develop them in RAM 15, and controls operations of each section intensively according to the control program. Further, the control section 11 conducts various types of processing in accordance with the program developed in RAM 15, and causes the results of the processing to be stored in RAM 15 temporarily and to be displayed on the display section 13. To be concrete, the control section 11 reads image data reduction processing program from the storage section 16, and conducts image data reduction processing which will be described later. Further, in the image data reduction processing, it transmits to facsimile 2 the reduction data generated based on resolutions of both images and facsimile 2, through network N.

In the image data reduction processing, when image read from image reading section 17 is inputted, the control section 11 makes this image to be binarized in the image conversion section 20 and makes image data to be generated. It further calculates image resolution data of the binarized image data, and acquires facsimile resolution data from facsimile 2 through network N to calculate the reduction rate based on the image resolution data and the facsimile resolution data. The reduction rate to be calculated here is one to convert image data and thereby to generate reduction data having the same resolution as in the facsimile resolution data.

Further, in the image data reduction processing, the control section 11 calculates the number of pixels of the image data necessary for generating one pixel of reduction data, based on the calculated reduction rate mentioned above, and divides image data by the matrix composed of the calculated number of pixels. Further, the control section 11 makes the counter 18 to count the number of black pixels for each divided matrix, and makes the pixel quantity comparing section 19 to compare the number of black pixels inputted from the counter 18 with the threshold value established in advance to acquire the results of the comparison. When the number of black pixels in the matrix is greater than the threshold value in this case, all pixels in the matrix are replaced with on black pixel. On the other hand, When the number of black pixels in the matrix is not greater than the threshold value, the control section 11 reads line-work conditions from the storage section 16 for reference, and recognizes the pixels constituting line-work in the image data. Then, when pixels constituting the line-work are present in the matrix, the control section 11 replace all pixels in the matrix with on black pixel, while, when the pixels are not present, all pixels in the matrix are replaced with on white pixel.

Namely, the control section 11 has functions as various means such as a dividing means, a gradation judgment means, a gradation determining means and a calculating means.

The input section 12 includes a key board equipped with a cursor key, a numeral input key and various types of functional keys, and outputs depression signals corresponding to keys depressed on the key board to the control section 11. Incidentally, the input section 12 may also be provided with a pointing device such as a mouse or a touch panel and with other input devices, as occasion demands.

The display section 13 is composed of LCD (Liquid Crystal Display) and CRT (Cathode Ray Tube), and displays thereon input instructions coming from the input section 12 and data, in accordance with instructions of display signals inputted from the control section 11.

The communication control section 14 is composed of LAN adaptor, a router and TA (Terminal Adaptor), and conducts control of the communication with each apparatus connected to network N through communication lines such as private lines or ISDN lines. Further, the communication control section 14 transmits facsimile resolution data received from facsimile 2 through network N to the control section 11, and transmits reduction data generated by image data reduction processing to facsimile 2 in accordance with instructions from the control section 11.

Namely, the communication control section 14 has functions as an output means and an acquiring means.

In each processing conducted and controlled by the control section 11, RAM (Random Access Memory) 15 forms a tentative storage area for system program, control program, input or output data and parameter which are read from storage section 16 and can be executed on image processing apparatus 1.

The storage section 16 has a recording medium (not shown) on which programs and data are stored in advance, and this recording medium is composed of a magnetic or optical recording medium, or of a semiconductor memory. This recording memory is one provided fixedly on storage section 16, or one mounted detachably, and a system program corresponding to server 1, various types of processing programs corresponding to the system programs and data of the results of the processing are stored in this recording medium. These programs in various types are stored in the form of a readable program code, and the control section 11 conducts successively the operations which conform to the program code.

To be concrete, the storage section 16 stores image data reduction processing program used in image data reduction processing, line-work conditions and results of image data reduction processing. The line-work conditions in this case mean conditions for recognizing line-work in image data. For example, a condition of a line-work in image data is that black pixels are continuous for 10 x 10 pixels or more in both directions of the main scanning direction and sub-scanning direction. Incidentally, this line-work condition is not limited to the numerical value (10 x 10 pixels).

The image reading section 17 is composed of a contact glass on which a photograph or an original is placed and of a scanner positioned below the contact glass, and it reads information of images of the photograph or the original. The scanner is composed of a light source, a lens and CCD (Charge Coupled Diode), and it forms an image from light that is applied from a light source on a photograph or an original and is reflected, then, it reads images by converting them photoelectrically , and transmits information of the images thus read to image conversion section 18 in accordance with instructions from the control section 11.

The counter 18 counts black pixels in each matrix of image data divided by the control section 11 in the image data reduction processing, and outputs the results of counting to pixel quantity comparing section 19.

The pixel quantity comparing section 19 compares the results of counting to be inputted from the counter 18, namely, the number of black pixels with the threshold value established in advance, and outputs the results of the comparison to the control section 11. Namely, the pixel quantity comparing section 19 has a function as a gradation judgment means.

The image conversion section 20 converts images inputted from the image reading section 17 into binary image data. Namely, the image conversion section 20 has a function as a generating means.

The image processing section 21 conducts various types of image data processing such as frequency processing and gradation processing on the inputted image data, in accordance with instructions inputted from the control section 11. Further, image processing section 17 conducts compression processing that compresses by means of the prescribed coding method, and extension processing that decodes the compressed image data to extend. It further generates reduction data by replacing pixels in each matrix in image data with one black or white pixel, based on the instruction coming from the control section 11.

Namely, the image processing section 21 has a function as an image processing means.

Next, operations will be explained as follows.

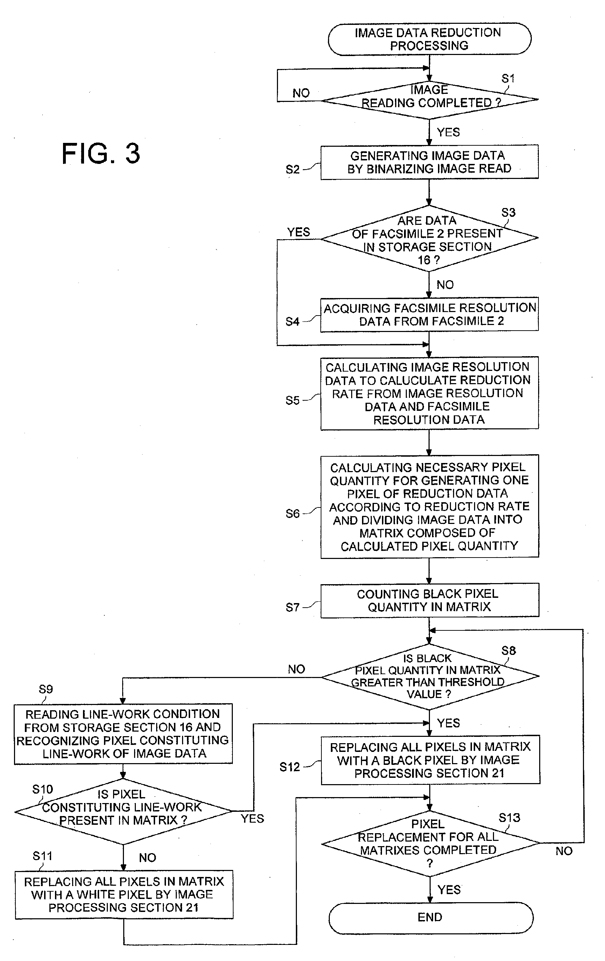

As an assumption for explanation of operations, programs for realizing respective processing described in the flow chart in Fig. 3 are stored in storage section 16 in the form of program code that can be read by the computer, and the control section 11 conducts successively the operations conforming to the aforesaid program code.

Fig. 3 is a flow chart showing image data reduction processing conducted by the control section 11 of the image processing apparatus 1 in Fig. 1. As shown in Fig. 3, when images read from the image reading section 17 are inputted, the control section 11 judges that image reading has been completed (step S1; YES) and makes the inputted images to be binarized by the image conversion section 20 to generate image data (Step S2). Then, the control section 11 judges if the facsimile resolution data are stored in storage section 16 (step S3), and when the data are stored (step S3; YES), the flow moves to step S5, while when the data are not stored (step S3; NO), the control section 11 acquires facsimile resolution data from communication control section 14 through network N (step S4), and moves to step S5.

Then, the control section 11 calculates image resolution data of the binarized image data and calculates the reduction rate for the image data based on image resolution data and facsimile resolution data (step S5). After that, in accordance with the calculated reduction rate, the control section 11 calculates the number of pixels of image data which have not been reduced and are needed to generate one pixel of the reduced data, and divides image data with a matrix composed of the calculated number of pixels (step S6). Next, the number of black pixels existing in each divided matrix is counted in the counter 18, then, the counted number of black pixels is compared with a threshold value by pixel quantity comparing section 19, and the result of comparison of the number of pixels in the matrix is obtained (step S7).

After that, when the result of distinction by the pixel quantity comparing section 19 is inputted from image reading section 17, the control section 11 reads line-work conditions from storage section 16 when the number of black pixels in the matrix is not greater than the threshold value (step S8; NO), then, it recognizes pixels constituting a line-work in image data (step S9), and judges if the pixels constituting a line-work are included in each matrix (step S10), and when the pixels constituting a line-work are not included (step S10; NO), all pixels in the matrix are replaced with one white pixel by image processing section 21 (step S11), and the flow moves to step S13.

On the other hand, when the number of black pixels in the matrix is greater than the threshold value in the step S8 (step S8; YES) and when pixels constituting a line-work are present in the matrix (step S10; YES), all pixels in the matrix are replaced with one black pixel by image processing section 21 (step S12), and the flow moves to step S13.

In step S13, the control section 11 judges if replacement of pixels has been terminated in all matrixes, and when the replacement has not been terminated (step S13; NO), the flow moves back to step S7, while, if the replacement has been terminated (step 513; YES), image data reduction processing is terminated.

After completion of the image data reduction processing, the control section 11 transmits the generated reduced data to facsimile 2 from communication control section 14 through network N, and stores the reduced data and image data before reduction in storage section 16.

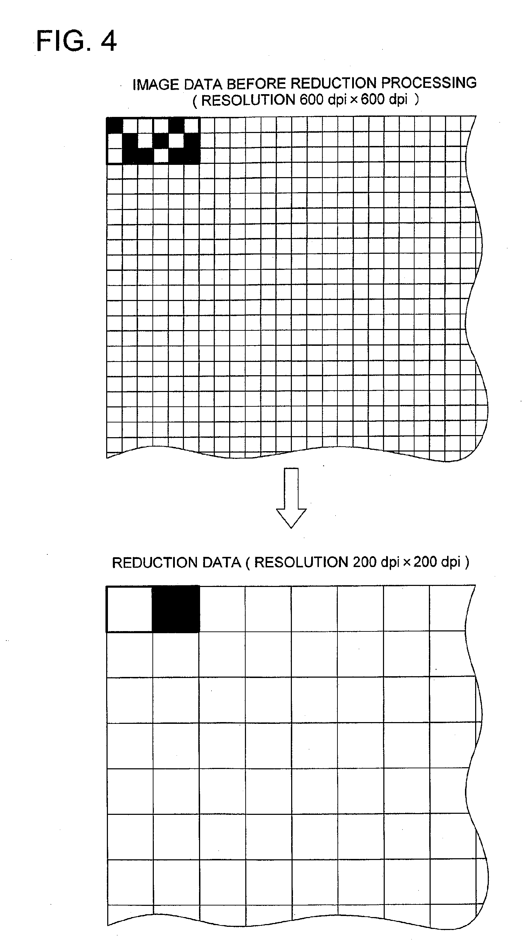

Now, image data reduction processing will be explained more concretely with reference to Fig. 4.

Fig. 4 is a diagram illustrating a concrete example of image data reduction processing. In the drawing, there are shown image data (an upper portion in the drawing) generated from images obtained through reading by image reading section 17 of image processing apparatus 1 and reduced data (a lower portion in the drawing). In this case, let it be assumed that resolution of the image data is 600 x 600 dpi and resolution of facsimile 2 is 200 x 200 dpi, and a threshold value in the pixel quantity comparing section 19 is 4, and neither matrix A nor matrix B shown in the drawing includes pixels constituting a line-work.

In the example shown in Fig. 4, the reduction rate for image data is 1/3 based on image resolution data and facsimile resolution data, and the control section 11 divides image data in a way that an amount equivalent to three pixels in each of the main scanning direction and the sub-scanning direction of image data, namely, an amount equivalent to nine pixels form a matrix. The control section 11 makes the counter 18 to count the number of black pixels in matrix A (number of black pixels 4), then, replaces nine pixels in matrix A with one white pixel because the number of black pixels is not more than the threshold value after the result of comparison by the pixel quantity comparing section 19, and forms one pixel of reduced data shown with A'. With respect to matrix B, nine pixels in the matrix B are replaced with one black pixel because the number of black pixels is 5 which is greater than the threshold value, and one pixel of reduced data shown with B' is generated.

In the image data reduction processing, the control section 11 generates image data by binarizing images read, and calculates image resolution data to calculate the reduction rate based on facsimile resolution data and the calculated image resolution data. Then, the control section 11 calculates the number of pixels of image data necessary to generate one pixel of reduced data based on the calculated reduction rate, and divides image data into a matrix calculated based on the calculated number of pixels. The number of black pixels in the divided matrix is compared with the established threshold value in the pixel quantity comparing section 19, and when the number of black pixels is not more than the threshold value, and no pixels constituting a line-work are included in the matrix, all pixels in the matrix are replaced with one white pixel, and in other cases, reduced data are generated by replacing all pixels in the matrix with one black pixel. Further, the control section 11 provides reduced data to facsimile 2 by means of communication control section 14 through network N.

In reducing image data, therefore, it is possible to preserve an original line-work of image data and to preserve gradation simultaneously. Since image data are binarized, it is possible to save memories to be used and to cut manufacturing cost for image processing apparatus 1, compared with image processing by means of multi-valuing. It is further possible to increase transmission speed without outputting excessive data, because reduced image data are outputted to an outer apparatus in accordance with resolution of the outer apparatus to be connected.

Incidentally, in the aforesaid embodiment, image processing apparatus 1 is connected to facsimile 2 having resolution that is lower than that of image data which are read by image processing apparatus 1 to output reduced data in accordance with facsimile resolution data. However, when the image processing apparatus 1 is connected to an outer apparatus having high resolution other than the facsimile 2, and when this outer apparatus has resolution that is equal to or higher than that of image data, it is naturally possible to transmit image data which have not been subjected to reduction processing to the outer apparatus as they are. In this method, it is possible to avoid deterioration of image quality of image data caused by enlargement or reduction processing, and to provide more clear data to the outer apparatus.

Further, in the aforesaid embodiment, detailed structures of the image processing apparatus 1 and detailed operations may be modified appropriately, without deviating from the spirit of the invention.

The present invention makes it possible to preserve an original line-work of image data and to keep the gradation when reducing the image data. Further, since image data are binarized in the invention, it is possible to save the memory to be used, compared with the image processing that employs multi-valuing, and thereby to provide an inexpensive image processing apparatus, and it is further possible to reduce an amount of data in the case of transmitting image data to an outer apparatus, and thereby to increase transmission speed. In addition, since reduced data and image data before reduction are selected to be transmitted, according to the resolution of an outer apparatus to which the image data are outputted, image data before reduction can be outputted to the other party having high resolution, which makes it possible to provide image data having less deterioration of image quality.

## Claims

1. An image processing apparatus, connected to an outer apparatus and transmits image data to said outer apparatus, comprising:
a generating means for generating binarized image data;
an acquiring means for acquiring, from said outer apparatus, said outer apparatus resolution data showing resolution of data to be processed by said outer apparatus;
a calculating means for calculating an image resolution data, showing resolution of said image data, and for calculating a reduction rate based on said image resolution data and on said outer apparatus resolution data;
a dividing means for dividing said image data into a plurality of matrixes in accordance with said reduction rate,
a gradation judgment means for judging gradation of each of said matrixes;
a distinction means for recognizing a line-work in said image data so as to distinguish whether pixels, constituting said line-work, are present in each of said matrixes or not;
a gradation determining means for determining gradation, after image processing in each of said matrixes, based on results of gradation judgment by said gradation judgment means and on results of distinction by said distinction means; and
an image processing means for replacing all pixels in each of said matrixes with one pixel, having gradation determined by said gradation determining means, to convert said image data to generate reduced data.

2. The image processing apparatus of claim 1, further comprising:
an output means for outputting said image data or said reduced data.
